# EUROPEAN PATENT APPLICATION

(11) **EP 2 361 584 A1**
(43) Date of publication of application: **31.08.2011**
(21) Application number: 10460005.1
(22) Date of filing: 22.02.2010
(51) Int. Cl.: A61C 1/08

(54) **Method for producing a drilling guide**

(71) Applicant: Duda, Mariusz, 40-748 Katowice (PL)
(72) Inventor: Duda, Mariusz, 40-748 Katowice (PL)
(74) Representative: Bogacki, Grzegorz

(57) **Abstract**

The invention relates to a method of making templates for implantological navigation and of transferring data for producing thereof, especially of a diagnostic template of and transferring data for manufacturing a surgical guide for dental implant placement. In a first stage, a diagnostic template (1) of thermoplastic material is formed directly in patient's mouth and markers (2,3) are placed in it to locate the spots of planned implantation. In a second stage, the three-dimensional implant positions are computer-processed using a program for implantological navigation. In a third stage, the planned axis (4) of implant (5) is determined: and a paper printout of the markers with the determined axis position from the screen in the size of the real markers is applied to the diagnostic template. In a fourth stage, the surgical guide (10) is carried out by introducing tubes (17) into the diagnostic template (1) and verifying the correct axis (4) of implant (5).

## Description

An object of the invention is a method of making of templates used for implantological navigation and a method of transferring of data from the program for implantological navigation to the diagnostic template in order to convert it into the surgical guide designed for dental implant placement.

The implantological navigation makes possible the pre-operative planning; which allows to find the correct location of implants, taking into account both the clinical aspects and esthetic ones. It is possible on the basis of evaluation of the x-ray examination by computed tomography, among other things of crestal bone shape, bone density, cortical layer thickness, measurements of distance in any three-dimensional section, assessment of the direction of lower tooth socket nerve and making a reference of these data to the implantation practicability.

The data obtained using X-ray examination by computed tomography can be utilized right away for planning of the implant position in case when the computer- tomograph possesses the suitable built-in software or one can use for this purpose the special software applications / programs designed for implantological navigation. Thanks to the application of different systems for implantological navigation and transfer of data acquired during planning it is possible to manufacture the surgical guides, which indicate the path of drill to be introduced for accurate implant location. Amongst presently available software applications / programs and systems for implantological navigation there are known among other things: Simplant (Materialise) - from the patents and patent applications US 7104795B2, US 6793491, US 20040219476 - referring to the manufacture of surgical drill guides including accessories, methods of temporary stabilization of the surgical guides, tool sets assisting the doctor / dental surgeon to define the optimum implant position in the bone. Already known is also the Med3D system (med3D GmbH) ― from patents and patent applications EP 2000407, W/20004/076106, EP 1599305 ― relating to the method of verification of pilot tube position in surgical guides on the basis of the computer assisted treatment plan, or Expertise method (Dentsplay Friadent) - according to the patent application US 20080176187 ― a technique of implant placement using the surgical guide controlling the positions of surgical drills, as well as the SurgiGuide system (Nobel Biocare) ― from patents and patent applications US 20090263764, EP 1486900A1 ― relating to the manufacture of surgical drill guides on the basis of virtual model of the implantation surroundings together with the system designed to verify a correctness of surgical guide position in the oral cavity.

Some of above mentioned systems are dedicated for specific systems applied in implantology (for example Expertise for Dentsplay Friadent or SurgiGuide for Nobel Biocare), what brings about that these systems are utilized in narrow field, i.e. merely for one implantological system.

The manufacturing process of known diagnostic templates and surgical drill guides for implantological navigation in above mentioned systems comprises several stages and takes place on different sites ― in dental practice, where the impressions are taken, in dental laboratory, in External Computed Tomography laboratory or Computed Tomography laboratory within dental practice, where set of CT scans is created, then in 3D Planning centre, whether / or in surgical guides production centre. The software applied in this process can comprise among other things the computer programs used for planning from the X-ray unit software application level, a data segmentation from DICOM format, navigation software used for creation of treatment plan, distant contact panel software communicating the 3D Planning centre with the physician / surgeon, an equipment software in surgical guides production centre.

In already known methods of manufacturing of templates occurs also the necessity of applying the special, expensive appliances for making of surgical drill guides in the surgical guides production centre. They are carried out as a rule also beyond the dental practice, what results in the logistic problems connected with their transport and transfer of corresponding data. This results in elongation of time and increase of manufacturing cost of the surgical drill guides. A considerable extent of entanglement, time-consumption and high cost of above mentioned methods brings about that they do not find widespread application in dental implantology.

The aim of present invention is elimination of hitherto existing inconveniences, and especially simplification of up to now applied methods of making of templates for dental implant placement.

The essence of method according to the invention consists in that in first stage the diagnostic template of thermoplastic material is being formed directly in patient's mouth and incorporates the upper marker and lower marker, which are located in place of the intended implantation. In second stage the X-ray examination by computed tomography is carried out with installed diagnostic template, then the data from X-ray examination are being processed using the software application/ program for implantological navigation into the three-dimensional positions of implants taking into consideration the patient's anatomy to elaborate the treatment plan and to transfer the data from the treatment plan to the diagnostic template. The transfer of data from the implantological navigation program onto the diagnostic template commences from the virtual setting of implant or implant axis perpendicularly to the display screen at the upper marker level when exposing its surface, and then the length of upper marker diagonal is measured on display screen /in millimetres/ and the image from display screen is printed out. In turn the length of upper marker diagonal is measured on the printout /in millimetres/ and from proportion the required length of upper marker on display screen /in millimeters/ is being calculated so as it corresponds on the printout to the sizes of upper marker in the 1:1 scale. In third stage, after obtainment of printout with real dimensions the upper marker paper outline is cut out and applied to the upper marker, afterwards the midpoint of implant axis is being transferred onto the upper marker as the drilling point. Then, the lower marker drilling point is being determined in the same manner by means of the lower marker paper outline and when connecting the upper marker drilling point with the lower marker drilling point the planned implant axis direction is being determined. In fourth stage the surgical guide is manufactured when carrying out the drilling / bore through the upper- and lower marker drilling points in order to introduce the pilot tube dedicated for specific implantological system. A maintaining of correct implant axis is verified by applying the lower- and upper marker paper outline to the diagnostic template. The upper marker clearance angle in relation to the top surface of the diagnostic template is orthogonal to the implant axis and implantation direction. The lower marker adheres to the soft tissue of crestal bone, whereby the lower marker clearance angle in relation to the gingiva level is perpendicular to the implantation direction. In case of toothless or big tooth losses, before carrying out the computed tomography the diagnostic template is stabilized in oral cavity using the template fixing screws and distance fixings, whereby the canals for screws and distance fixings have to be drilled in the template. In the places of tooth losses the thickness of thermoplastic material layer amounts to 7 ― 10 mm, advantageously 8 mm, the thickness of thermoplastic material layer in the neighborhood of lateral surfaces of tooth crowns amounts to 0,5 ― 1 mm, advantageously 0,8 mm, and in the places foreseen for the application of fixing screws an additional thermoplastic material is applied so as the thickness of this material layer amounts to 4 ― 6 mm, advantageously 5 mm. The treatment plan constitutes the list of data for the implant placement including the implant length, implant depth, drilling length, soft tissue thickness on drilling site, platform width and implant type as well as implant axis. After completion of the drilligs in the surgical guide and checking of implant axis pattern / direction, the top surface of the guide facing the upper marker is being cut off leaving the thermoplastic material layer having the thickness from 5 mm to 6 mm, advantageously 5,5 mm.

The invention can be easily introduced in the implantological practice using the non-specific means commonly available for dentists. The primary items required for application of the method are the following: thermoplastic material, pilot tubes for implant positioning, orthodontic implants to be used as the fixing screws and distance fixings and metal mesh. The invention simplifies the hitherto existing methods, does not require producing of any special materials, devices, tools or software applications / programs. The surgical drill guides manufactured under application of the described methods are versatile ones and can be adopted for each and every implantological system.

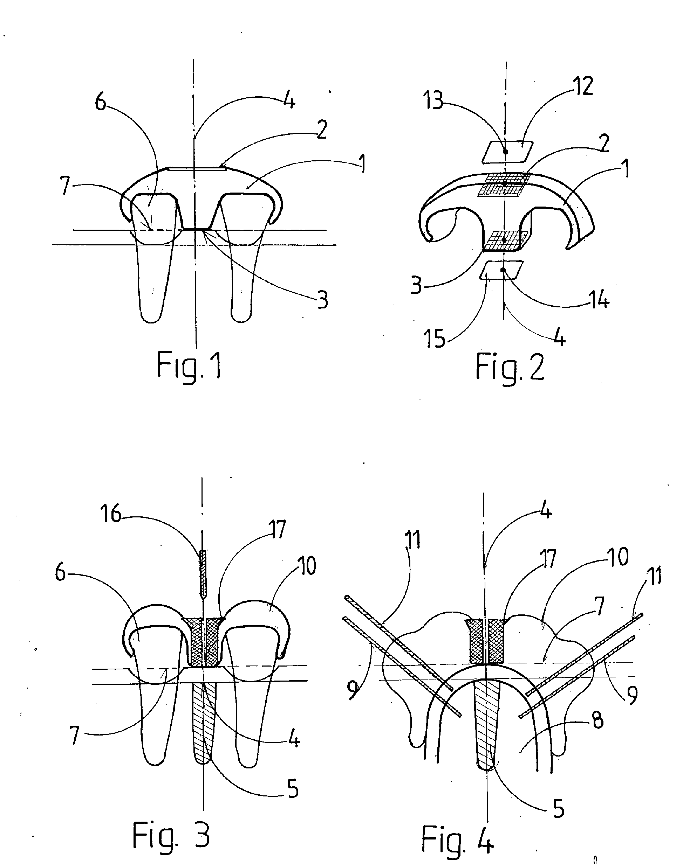

An example of a method of making templates according to the invention is illustrated in general outline in the accompanying drawings, wherein fig. 1 shows in a sectional side elevation the diagnostic template with the upper- and lower markers, fig. 2 shows in axonometric projection the template as in fig. 1, fig. 3 shows in a sectional side elevation the surgical guide with pilot drill tube exposed, and fig. 4 shows in a sectional side elevation the surgical guide with fixing screws and distance fixings.

An exemplary procedure of carrying out of the diagnostic template, surgical drill guide and a technique of transfer of data required for manufacture thereof is as follows:
In first stage a physician, sanitarian or assistant in dental practice create, using a thermoplastic material and handling directly in patient's mouth, the diagnostic template 1 with upper marker 2 and lower marker 3, which are located in the place of intended implantation. The upper marker 2 must have a length corresponding to the mesiodistal measurement of the tooth loss. The upper marker 2 clearance angle in relation to the top surface of the diagnostic template 1 should be perpendicular to the expected implantation direction, that is axis 4 of implant 5. The lower marker 3 should have a length less than a distance between the projections of tooth undercuts 6 adjacent to the tooth loss diminished by 2 mm. The lower marker 3 must be adherent to the soft tissue 7 of crestal bone 8. The thermoplastic material can reach the surface of gingiva in the vicinity of planned implantation, it should then incorporate the sealed lower marker 3, abutting delicately against the top of crestal bone 8 at the gingiva level 7, whereby the clearance angle of lower marker 3 to the gingiva level 7 should be perpendicular to the expected implantation direction. In the places of tooth losses the thickness of thermoplastic material layer must amount to 7 mm ― 10 mm, advantageously 8 mm, the thickness of thermoplastic material layer applied in the neighbourhood
   of lateral surfaces of the tooth crowns 6 should amount to 0,5 mm ― 1 mm, advantageously 0,8 mm, what makes possible easy removal of the diagnostic template 1 from the dental arch. When necessary, in the places foreseen as the base for the fixing screws 9 stabilizing the surgical guide 10 the thermoplastic material is applied additionally so as the thickness of this material layer amounts to 4 mm ― 6 mm, advantageously 5 mm. After getting the thermoplastic material cured and removal of the diagnostic template 1 from the teeth it is necessary to cut off by means of scalpel the portions of thermoplastic material protruding into the surroundings of teeth undercuts 6 and into the interdental gaps. The correctly manufactured diagnostic template 1 can be removed and re-installed on the dental arch at the same position. In case of toothless or big tooth losses, before carrying out the computed tomography it is necessary to stabilize the diagnostic template 1 in oral cavity. For that purpose several fixing screws 9 stabilizing the surgical guide 10 together with several distance fixings 1 are being used. The canals for the surgical guide 10 fixing screws 9 and for the distance fixings 11 are being drilled In the diagnostic template 1, then through the canals for the surgical guide 10 fixing screws 9 the drillings in the bone are being carried out to the depth of 2-3 mm as the catch points for stabilizing the diagnostic template 1. The distance fixings 11 prevent from settlement of the diagnostic template 1 on the soft tissue 7 of crestal bone 8.

In second stage, following manufacture of the diagnostic template 1, the X-ray examination using a medical or dentist's computer- tomograph is being carried out with diagnostic template 1 installed. The presence of the diagnostic template 1 with upper marker 2 and lower marker 3 in patient's mouth when carrying out the X-ray examination by computed tomography results in exposure of the markers 2,3 on the X-ray pictures from computed tomography. The data from the computer-tomograph in DICOM-format are transmitted to the surgeon on CD or undergo the processing using the computed tomography program. The X- ray pictures from computed tomography provide a precise three-dimensional imaging - on the basis of X-ray examination by computed tomography using the 3D implantological navigation software the surgeon is planning the implant positions taking into consideration the patient's anatomy and with regard to the optimum prosthetic relation within the area of the diagnostic template. It is during this phase that the treatment plan is being created. This plan constitutes a list of data for introducing of implant 5 comprising the length of implant 5, depth of implant 5, drilling length, thickness of soft tissue 7 in bone drilling point, platform width and implant type. Moreover, the axis 4 of implant 5 is visible on the display screen. The data from the treatment plan are being transferred on the diagnostic template 1 in order to convert it into the surgical drill guide 10. The data transfer from the implantological navigation software on the diagnostic template 1 commences from the virtual setting of implant 5 or axis 4 of implant 5 orthogonally to the display screen at the level of upper marker 2 when exposing the surface of upper marker 2. Then the diagonal length of upper marker 2 is being measured on the display screen in millimetres and the image from the display screen is printed out on the sheet of paper. Now, the diagonal length of upper marker 2 is being measured on this paper image in millimeters and on the basis of proportion the calculation is made what should be the required diagonal length of upper marker 2 on the display screen /in millimeters/ so as on the sheet of paper it corresponds to the actual sizes of upper marker 2 in the I : scale.

In third stage, after obtainment of the printout having the actual sizes, the paper outline 12 of upper marker 2 is being cut out. The paper outline 12 is applied to the upper marker 2 on the diagnostic template 1 and then the midpoint of axis 4 of implant 5 is transferred onto the upper marker 2 as the drilling point 13 of upper marker 2. The same procedure is carried out in case of the lower marker 3 when determining the drilling point 14 of lower marker 3 by means of paper outline 15 of lower marker 3. When connecting two points: the drilling point 13 of upper marker 2 and drilling point 14 of lower marker 3 the planned direction of axis 4 of implant 5 is being determined.

In fourth stage the surgical guide 10 is manufactured according to the following procedure: thanks to determination of the planned direction of axis 4 of implant 5 running through the drilling points 13,14 of upper marker 2 and lower marker 3 the drilling throughout the diagnostic template 1 is being carried out using the pilot drill 16 having the diameter of 1,5-2,0 mm. The consecutive drillings are to be carried out using the drills suitable for given implantological system or prosthetic mills for acryl in such scope in which they correspond to the versatile pilot tubes 17 or tubes 17 dedicated for specific implantological system. The verification of keeping the correct direction of axis 4 of implant 5 is carried out by applying the paper outlines 12,15 of upper marker 2 and lower marker 3 to the diagnostic template 1 after carrying out of each following drilling. After completion of last drilling and checking the correctness of direction of planned axis 4 of implant 5, the top surface of diagnostic template 1 facing the upper marker 2 is being cut off leaving the thermoplastic material layer having thickness from 5 mm to 6 mm depending on the height of pilot tubes 17 to be used. The tube 17 for pilot drill 16 must be driven using a negative allowance, in similar manner the successive, replaceable tubes 17 are being introduced during surgery / implantological treatment. After insertion of tube 17 onto the pilot drill 16 for thermoplastic material, the diagnostic template 1 becomes the surgical guide 10, which is applied in accordance with generally accepted rules and which reflects the data from treatment plan, comprising the length of impant 5, depth of implant 5, drilling length, thickness of soft tissue 7 in bone drilling point supplemented by the platform width, type of implant 5 as well as a three-dimensional orientation of implant 5. If necessary, it is possible to carry out some drillings using the drill 1,5 ― 2 mm in order to introduce in previously foreseen and prepared places several screws 9 stabilizing the surgical guide 10 together with few distance fixings 11.

## Claims

1. The method of making of templates for implantological navigation and transferring of data for producing thereof, especially of diagnostic template and transferring of data for manufacturing of surgical drill guide for dental implant placement **characterized in that** in first stage the diagnostic template /1/ of thermoplastic material is being formed directly in patient's mouth and the upper marker /2/ and lower marker /3/ is placed in it to locate the spots of planned implantation, in second stage the X-ray examination by means of computer- tomograph is carried out with installed diagnostic template /1/, and then the data from X-ray examination are being processed using the program for implantological navigation into the three-dimensional positions of implants taking into consideration the patient's anatomy to elaborate the treatment plan and to transfer the data from the treatment plan to the diagnostic template /1/ when setting virtually the implant /5/ or axis /4/ of implant /5/ perpendicularly to the display screen at the level of upper marker /2/ when exposing its surface, and then the length of upper marker diagonal is measured on display screen in millimeters, the image from display screen is being printed out and the diagonal length of upper marker /2/ is being measured on the paper printout in millimeters and the required length of upper marker /2/ on display screen in millimeters is being calculated from proportion so as it corresponds on the printout to the sizes of upper marker /2/ in the 1:1 scale, in third stage the paper outline /12/ of upper marker /2/ is being cut out, applied to the upper marker /2/ and the axis /4/ of implant /5/ is being transferred on the upper marker /2/ as the drilling point /13/ of upper marker /2/, then in the same manner the drilling point /14/ of lower marker /3/ is being determined by means of paper outline /15/ of lower marker /3/ and when connecting the drilling point /13/ of upper marker /2/ with drilling point /14/ of lower marker /3/ the planned direction of axis /4/ of implant /5/ is being determined, and in fourth stage the surgical guide /10/ is being manufactured when carrying out the drilling using the pilot drill /16/ through the drilling points /13,14/ of upper marker /2/ and lower marker /3/ to introduce the pilot tube /17/ dedicated for specific implantological system and verifying the correct position of axis /4/ of implant /5/ by applying the paper outlines /12,15/ of lower marker /3/ and upper marker /2/ to the diagnostic template /1/.

2. The method according to Claim 1, **characterized in that** in first stage the clearance angle of upper marker /2/ in relation to the top surface of the diagnostic template /1/ is orthogonal to the axis /4/ of implant /5/ and implantation direction.

3. The method according to Claim 1, **characterized in that** in first stage the lower marker /3/ adheres to the soft tissue /7/ of crestal bone /8/, whereby the clearance angle of lower marker /3/ to the soft tissue /7/ is perpendicular to the implantation direction.

4. The method according to Claim 1, **characterized in that** in first stage, in case of toothless or big tooth losses, before carrying out the computed tomography the diagnostic template /1/ is stabilized in oral cavity using the fixing screws /3/ and distance fixings /11/, whereby the canals for the screws /3/ and distance fixings /11/ have to be drilled in the template.

5. The method according to Claim 1, **characterized in that** in places of tooth losses the thickness of thermoplastic material layer amounts to 7 ― 10 mm, advantageously 8 mm, the thickness of thermoplastic material layer in the neighborhood of lateral surfaces of tooth crowns amounts to 0,5 ― 1 mm, advantageously 0,8 mm, and in the places foreseen for the application of fixing screws /9/ an additional thermoplastic material is applied so as the thickness of this material layer amounts to 4 ― 6 mm, advantageously 5 mm.

6. The method according to Claim 1, **characterized in that** the treatment plan constitutes the list of data required for the placement of implant /5/ comprising its length, depth, drilling length, thickness of soft tissue /7/ on drilling site, platform width and implant type as well as the axis /4/ of implant /5/.

7. The method according to Claim 1, **characterized in that** in fourth stage, after carrying out of the drillings in the surgical guide /10/ and checking the direction of axis /4/ of implant /5/, the top surface of the guide facing the upper marker /2/ is being cut off leaving the thermoplastic material layer having the thickness from 5 mm to 6 mm, advantageously 5,5 mm.
